# EUROPEAN PATENT SPECIFICATION

(11) **EP 4 512 747 B1**
(45) Date of publication and mention of the grant of the patent: **09.09.2026**
(21) Application number: 23791018.7
(22) Date of filing: 31.03.2023
(51) Int. Cl.: B65G 1/137, B65G 1/04, G06Q 10/08, G06Q 10/087

(54) **WAREHOUSE MANAGEMENT METHOD, APPARATUS AND SYSTEM, DEVICE AND ROBOT**
LAGERVERWALTUNGSVERFAHREN, -VORRICHTUNG UND -SYSTEM, -VORRICHTUNG UND -ROBOTER
PROCÉDÉ, APPAREIL ET SYSTÈME DE GESTION D'ENTREPÔT, DISPOSITIF ET ROBOT

(30) Priority: 19.04.2022 CN 202210410348
(43) Date of publication of application: 26.02.2025
(73) Proprietor: Hai Robotics Co., Ltd., Shenzhen, Guangdong 518000 (CN); Shenzhen Kubo Software Co., Ltd, Shenzhen, Guangdong 518100 (CN)
(72) Inventor: XIE, Chao, Shenzhen, Guangdong 518000 (CN); WU, Jing, Shenzhen, Guangdong 518100 (CN)
(74) Representative: Gulde & Partner
(86) International application number: PCT/CN2023/085794
(87) International publication number: WO 2023/202362

(56) References cited:
- EP-A1- 3 835 236
- WO-A1-2020/063416
- WO-A1-2021/227550
- AU-A1- 2016 384 096
- AU-A1- 2020 414 892
- CN-A- 107 516 142
- CN-A- 109 359 924
- CN-A- 111 620 024
- CN-A- 113 371 379
- CN-A- 113 697 348
- CN-A- 114 715 591
- CN-U- 212 557 863
- US-A1- 2021 398 237

## Description

### TECHNICAL FIELD

This application relates to the field of smart warehouse technologies, and in particular, to a warehouse management method, apparatus, system, and device, and a robot.

### BACKGROUND OF THE INVENTION

Multiple-deep shelving units have emerged to improve warehouse utilization. A multiple-deep shelving unit includes a plurality of longitudinally disposed warehouse positions. Multiple-deep shelving units can save a warehouse space and improve warehouse utilization. However, such shelving units cause inconvenience in retrieval and storage. When it is necessary to perform a retrieval or storage operation on an internal warehouse position, if a container is placed in an external warehouse position corresponding to the internal warehouse position, the container needs to be removed before the retrieval or storage operation can be successfully performed on the internal warehouse position.

In the prior art, a first robot is usually controlled to carry away the container on the external warehouse position, and then a second robot is controlled to perform the retrieval or storage operation on the internal warehouse position. Such a manner requires mutual cooperation of a plurality of robots, and as a result the processing difficulty of a scheduling server as well as the management difficulty and management costs of warehouses are increased.

Australian patent application AU2020414892A1 discloses container handling method employing dense storage. At least one storage shelf consisting of at least four columns of high shelves is comprised. The method comprises: when at least one blocking container blocking removal of a target container is stored on the storage shelf, a container fetching mechanism of a robot respectively fetching the at least one blocking container from the storage shelf, and temporarily storing same on a buffer mechanism of the robot; and the container fetching mechanism of the robot fetching the target container from the storage shelf, storing same on the buffer mechanism of the robot, sequentially fetching the at least one blocking container from the buffer mechanism of the robot, and sequentially placing same at an original storage position thereof, an original storage position of the target container, or other vacant storage positions on the storage shelf; alternatively, when the buffer mechanism of the robot is full due to the at least one blocking container, the container fetching mechanism of the robot fetching the target container from the storage shelf, and keeping same on the container fetching mechanism of the robot.

### SUMMARY OF THE INVENTION

A warehouse management method, apparatus, system, and device, and a robot provided in the present disclosure can reduce a quantity of robots in warehouses, reduce the processing difficulty of a scheduling server and the management difficulty of warehouses, reduce the management costs of warehouses, and optimize a warehouse management process. The invention is set out in the appended set of claims.

According to a first aspect, the present disclosure provides a warehouse management method, appliable to a scheduling server in a warehouse system, the method including: determining attribute information of a target warehouse position of a first container, where the attribute information of the target warehouse position includes position information of the target warehouse position, and the first container is a container on which a robot is to perform a first operation; if the target warehouse position is an internal warehouse position of a multiple-deep shelving unit and at least one second container is placed in an external warehouse position corresponding to the target warehouse position, determining at least one first rack from at least two racks in a no-load state of the robot; and sending a first operation instruction to the robot to control the robot to take out each second container and place the second container in the at least one first rack, and sending a second operation instruction to the robot to control the robot to perform an operation corresponding to the second operation instruction on the first container, to take out the first container from the target warehouse position or place the first container in the target warehouse position.

Optionally, the determining at least one first rack from at least two racks in a no-load state of the robot includes: determining whether at least one vacant warehouse position exists in a target range; if the at least one vacant warehouse position exists, for each second container, determining a first duration taken to control the robot to take out the second container and place the second container in a corresponding vacant warehouse position and a second duration taken to control the robot to take out the second container and place the second container in a corresponding rack in a no-load state; and comparing the first duration and the second duration corresponding to each second container, and determining the at least one first rack from the at least two racks in a no-load state of the robot according to a comparison result.

Optionally, the determining at least one first rack from at least two racks in a no-load state includes: acquiring position information of the at least two racks in a no-load state, where the racks in a no-load state include at least two third racks, or include at least one second rack and at least two third racks, or include at least two second racks and at least one third rack, the second rack is a rack only used for temporarily storing the second container when the robot needs to perform the first operation on the first container, when the robot includes a second rack, the third rack is a rack other than the second rack in the racks in the robot, and when the robot does not include a second rack, the third rack is any rack in the robot; and determining the at least one first rack from the racks in a no-load state according to the position information of each rack in a no-load state.

Optionally, the determining the at least one first rack from the racks in a no-load state according to the position information of each rack in a no-load state includes: determining a height difference between each rack in a no-load state and the target warehouse position according to the position information of each rack in a no-load state and the position information of the target warehouse position; and determining the at least one first rack according to an ascending order of height differences between the position information of the racks in a no-load state and the target warehouse position.

Optionally, if the second duration is less than or equal to the first duration, the method further includes: sending a third operation instruction to the robot to control the robot to take out a target second container and place the target second container in a corresponding vacant warehouse position, where the target second container is a second container with the corresponding second duration greater than the corresponding first duration.

Optionally, the second operation instruction includes any following instruction: a storing instruction, and a delivery instruction.

Optionally, the method further includes: sending a fourth operation instruction to the robot to control the robot to take out each second container from a first rack and place the second container in an external warehouse position.

According to a second aspect, the present disclosure provides a warehouse management method, appliable to a robot in a warehouse system, the robot including at least two racks in a no-load state, the method including: taking out a second container from an external warehouse position corresponding to a target warehouse position in response to a first operation instruction, and placing the second container in a first rack in the robot; and performing a corresponding operation on a first container in response to a second operation instruction to take out the first container from the target warehouse position or place the first container in the target warehouse position, where the first operation instruction and the second operation instruction are generated and sent by a scheduling server when the target warehouse position of the first container is an internal warehouse position located in a multiple-deep shelving unit and at least one second container is placed in the external warehouse position corresponding to the target warehouse position.

Optionally, the second operation instruction includes: a storing instruction, and a delivery instruction.

Optionally, when the racks in a no-load state include at least two third racks, or include at least one second rack and at least two third racks, or include at least two second racks and at least one third rack, the first rack in the robot is determined according to position information of the racks in a no-load state.

Optionally, the method further includes: taking out a target second container in response to a third operation instruction, and placing the target second container in a corresponding vacant warehouse position, where the third operation instruction is generated and sent by the scheduling server when a first duration corresponding to the target second container is less than a second duration corresponding to the target second container, the first duration is a time taken for the scheduling server to control the robot to take out the second container and place the second container in the corresponding vacant warehouse position, and the second duration is a time taken for the scheduling server to control the robot to take out the second container and place the second container in a corresponding rack in a no-load state.

Optionally, the method further includes: taking out each second container from a first rack in response to a fourth operation instruction, and placing the second container in a corresponding external warehouse position.

According to a third aspect, the present disclosure provides a warehouse management apparatus, the apparatus including:
a determination module, configured to determine attribute information of a target warehouse position of a first container, where the attribute information of the target warehouse position includes position information of the target warehouse position, and the first container is a container on which a robot is to perform a first operation;
the determination module being further configured to: if the target warehouse position is an internal warehouse position of a multiple-deep shelving unit and at least one second container is placed in an external warehouse position corresponding to the target warehouse position, determine at least one first rack from at least two racks in a no-load state of the robot; and
a sending module, configured to: send a first operation instruction to the robot to control the robot to take out each second container and place the second container in the at least one first rack, and send a second operation instruction to the robot to control the robot to perform an operation corresponding to the second operation instruction on the first container, to take out the first container from the target warehouse position or place the first container in the target warehouse position.

Optionally, the determination module is further configured to: determine whether at least one vacant warehouse position exists in a target range; if the at least one vacant warehouse position exists, for each second container, determining a first duration taken to control the robot to take out the second container and place the second container in a corresponding vacant warehouse position and a second duration taken to control the robot to take out the second container and place the second container in a corresponding rack in a no-load state; and compare the first duration and the second duration corresponding to each second container, and determine the at least one first rack from the at least two racks in a no-load state of the robot according to a comparison result.

Optionally, the determination module is configured to: acquire position information of the at least two racks in a no-load state, where the racks in a no-load state include at least two third racks, or include at least one second rack and at least two third racks, or include at least two second racks and at least one third rack, the second rack is a rack only used for temporarily storing the second container when the robot needs to perform the first operation on the first container, when the robot includes a second rack, the third rack is a rack other than the second rack in the racks in the robot, and when the robot does not include a second rack, the third rack is any rack in the robot; and determine the at least one first rack from the racks in a no-load state according to the position information of each rack in a no-load state.

Optionally, the determination module is further configured to: determine a height difference between each rack in a no-load state and the target warehouse position according to the position information of each rack in a no-load state and the position information of the target warehouse position; and determine the at least one first rack according to an ascending order of height differences between the position information of the racks in a no-load state and the target warehouse position.

Optionally, the sending module is further configured to: send a third operation instruction to the robot to control the robot to take out a target second container and place the target second container in a corresponding vacant warehouse position, where the target second container is a second container with the corresponding second duration greater than the corresponding first duration.

Optionally, the second operation instruction includes any following instruction: a storing instruction, and a delivery instruction.

Optionally, the sending module is further configured to send a fourth operation instruction to the robot to control the robot to take out each second container from a first rack and place the second container in a corresponding external warehouse position.

According to a fourth aspect, the present disclosure provides a warehouse management apparatus, the apparatus including:
a processing module, configured to: take out a second container from an external warehouse position corresponding to a target warehouse position in response to a first operation instruction, and place the second container in a first rack in the robot; and perform a corresponding operation on a first container in response to a second operation instruction to take out the first container from the target warehouse position or place the first container in the target warehouse position, where the first operation instruction and the second operation instruction are generated and sent by a scheduling server when the target warehouse position of the first container is an internal warehouse position located in a multiple-deep shelving unit and at least one second container is placed in the external warehouse position corresponding to the target warehouse position.

Optionally, the second operation instruction includes: a storing instruction, and a delivery instruction.

Optionally, when the racks in a no-load state include at least two third racks, or include at least one second rack and at least two third racks, or include at least two second racks and at least one third rack, the first rack in the robot is determined according to position information of the racks in a no-load state.

Optionally, the processing module is further configured to: take out a target second container in response to a third operation instruction, and place the target second container in a corresponding vacant warehouse position, where the third operation instruction is generated and sent by the scheduling server when a first duration corresponding to the target second container is less than a second duration corresponding to the target second container, the first duration is a time taken for the scheduling server to control the robot to take out the second container and place the second container in the corresponding vacant warehouse position, and the second duration is a time taken for the scheduling server to control the robot to take out the second container and place the second container in a corresponding rack in a no-load state.

Optionally, the processing module is further configured to: take out each second container from a corresponding first rack in response to a fourth operation instruction, and place the second container in a corresponding external warehouse position.

According to a fifth aspect, the present disclosure provides a warehouse management system, the system including a scheduling server and a robot, where the scheduling server is communicatively connected to the robot;
the scheduling server is configured to: determine attribute information of a target warehouse position of a first container, where the attribute information of the target warehouse position includes position information of the target warehouse position, and the first container is a container on which the robot is to perform a first operation; and if the target warehouse position is an internal warehouse position of a multiple-deep shelving unit and at least one second container is placed in an external warehouse position corresponding to the target warehouse position, determine at least one first rack from at least two racks in a no-load state of the robot, and send a first operation instruction and a second operation instruction to the robot; and
the robot is configured to: take out the at least one second container and place the at least one second container in the at least one first rack in response to the first operation instruction, and perform an operation corresponding to the second operation instruction on the first container in response to the second operation instruction to take out the first container from the target warehouse position or place the first container in the target warehouse position.

Optionally, the scheduling server is further configured to: determine whether at least one vacant warehouse position exists in a target range; if the at least one vacant warehouse position exists, for each second container, determining a first duration taken to control the robot to take out the second container and place the second container in a corresponding vacant warehouse position and a second duration taken to control the robot to take out the second container and place the second container in a corresponding rack in a no-load state; and compare the first duration and the second duration corresponding to each second container, and determine the at least one first rack from the at least two racks in a no-load state of the robot according to a comparison result.

Optionally, the scheduling server is configured to: acquire position information of the at least two racks in a no-load state, where the racks in a no-load state include at least two third racks, or include at least one second rack and at least two third racks, or include at least two second racks and at least one third rack, the second rack is a rack only used for temporarily storing the second container when the robot needs to perform the first operation on the first container, when the robot includes a second rack, the third rack is a rack other than the second rack in the racks in the robot, and when the robot does not include a second rack, the third rack is any rack in the robot; and determine the at least one first rack from the racks in a no-load state according to the position information of each rack in a no-load state.

Optionally, the scheduling server is further configured to: determine a height difference between each rack in a no-load state and the target warehouse position according to the position information of each rack in a no-load state and the position information of the target warehouse position; and determine the at least one first rack according to an ascending order of height differences between the position information of the racks in a no-load state and the target warehouse position.

Optionally, the scheduling server is further configured to send a third operation instruction to the robot.

The robot is further configured to: take out a target second container in response to a third operation instruction, and place the target second container in a corresponding vacant warehouse position, where the target second container is a second container with the corresponding second duration greater than the corresponding first duration.

Optionally, the second operation instruction includes any following instruction: a storing instruction, and a delivery instruction.

Optionally, the scheduling server is further configured to send a fourth operation instruction to the robot.

The robot is further configured to: take out each second container from a corresponding first rack in response to a fourth operation instruction, and place the second container in a corresponding external warehouse position.

According to a sixth aspect, the present disclosure provides an electronic device, including: at least one processor; and a memory communicatively connected to the at least one processor, where the memory stores instructions executable by the at least one processor, and the instructions, when executed by the at least one processor, cause the at least one processor to perform the method provided in the first aspect and optional manners thereof.

According to a seventh aspect, the present disclosure provides a robot, including: at least one processor; and a memory communicatively connected to the at least one processor, where the memory stores instructions executable by the at least one processor, and the instructions, when executed by the at least one processor, cause the at least one processor to perform the method provided in the second aspect and optional manners thereof.

According to an eighth aspect, the present disclosure provides a computer-readable storage medium, where the computer-readable storage medium stores computer-executable instructions, and the computer-executable instructions, when executed by a processor, implement the method of the first aspect and optional manners thereof or the second aspect and optional manners thereof.

According to a ninth aspect, the present disclosure provides a computer program product, including a computer program/instructions, where the computer program/instructions, when executed by a processor, implement the method of the first aspect and optional manners thereof or the second aspect and optional manners thereof.

For the warehouse management method, apparatus, system, and device, and the robot provided in the present disclosure, attribute information of a target warehouse position of a first container on which a robot is to perform a first operation is determined; if the target warehouse position is an internal warehouse position of a multiple-deep shelving unit and at least one second container is placed in an external warehouse position corresponding to the target warehouse position, at least one first rack is determined from at least two racks in a no-load state of the robot; and a first operation instruction is sent to the robot to control the robot to take out each second container and place the second container in the at least one first rack, and a second operation instruction is sent to the robot to control the robot to perform an operation corresponding to the second operation instruction on the first container, to take out the first container from the target warehouse position or place the first container in the target warehouse position, so that a quantity of robots in warehouses can be reduced, the processing difficulty of a scheduling server and the management difficulty of warehouses can be reduced, the management costs of warehouses can be reduced, and a warehouse management process can be optimized.

### BRIEF DESCRIPTION OF DRAWINGS

FIG. 1 is a schematic diagram of an application scenario of a warehouse management method according to the present disclosure;
FIG. 2 is a schematic flowchart of a warehouse management method according to the present disclosure;
FIG. 3 is another schematic flowchart of a warehouse management method according to the present disclosure;
FIG. 4 is still another schematic flowchart of a warehouse management method according to the present disclosure;
FIG. 5 is a schematic structural diagram of a warehouse management apparatus according to the present disclosure;
FIG. 6 is another schematic structural diagram of a warehouse management apparatus according to the present disclosure;
FIG. 7 is a schematic structural diagram of a warehouse management system according to the present disclosure;
FIG. 8 is a schematic structural diagram of an electronic device according to the present disclosure; and
FIG. 9 is a schematic structural diagram of a robot according to the present disclosure.

Definite embodiments of the present disclosure have been shown by means of the above accompanying drawings, which will be described in greater detail later. These accompanying drawings and textual descriptions are not intended to limit the scope of the concept of the present disclosure in any way, but rather to illustrate the concepts of the present disclosure for those skilled in the art with reference to particular embodiments.

### DETAILED DESCRIPTION

Exemplary embodiments are described in detail herein, and examples of the exemplary embodiments are shown in the accompanying drawings. When the following description involves the accompanying drawings, unless otherwise indicated, the same numerals in different accompanying drawings represent the same or similar elements. Implementations described in the following exemplary embodiments do not represent all implementations consistent with the present disclosure. On the contrary, the implementations are merely examples of an apparatus and a method that are consistent with some aspects of the present disclosure described in detail in claims.

A multiple-deep shelving unit includes a plurality of longitudinally disposed warehouse positions. Multiple-deep shelving units can save a warehouse space and improve warehouse utilization. However, such shelving units cause inconvenience in retrieval and storage. When it is necessary to perform a retrieval or storage operation on an internal warehouse position, if a container is placed in an external warehouse position corresponding to the internal warehouse position, the container needs to be removed before the retrieval or storage operation can be successfully performed on the internal warehouse position. In the prior art, a first robot is usually controlled to carry away the container on the external warehouse position, and then a second robot is controlled to perform the retrieval or storage operation on the internal warehouse position. Such a manner requires mutual cooperation of a plurality of robots, and as a result the processing difficulty of a scheduling server as well as the management difficulty and management costs of warehouses are increased.

When a robot performs an operation on an internal warehouse position of a multiple-deep shelving unit, if a container on an external warehouse position can be temporarily stored in a rack disposed on a body of the robot, the operation on the internal warehouse position of the multiple-deep shelving unit can be completed through one robot, so that the processing difficulty of a scheduling server and the management difficulty of warehouses can be effectively reduced, management costs can be reduced, and a warehouse system can be optimized. Based on this, the present disclosure provides a warehouse management method, applied to a scheduling server in a warehouse system. First, the scheduling server determines whether a target warehouse position corresponding to a to-be-stored or to-be-delivered first container is an internal warehouse position of a multiple-deep shelving unit. When the target warehouse position is an internal warehouse position of a multiple-deep shelving unit, it is determined whether a container is placed in an external warehouse position corresponding to the internal warehouse position. If the target warehouse position is an internal warehouse position of a multiple-deep shelving unit and a container is placed in an external warehouse position corresponding to the internal warehouse position, a first rack in a no-load state on a body of a robot is acquired, and an operation instruction is sent to the robot to control the robot to take out at least one container placed in the external warehouse position and place the at least one container in at least one first rack, and control the robot to perform a storing or delivery operation.

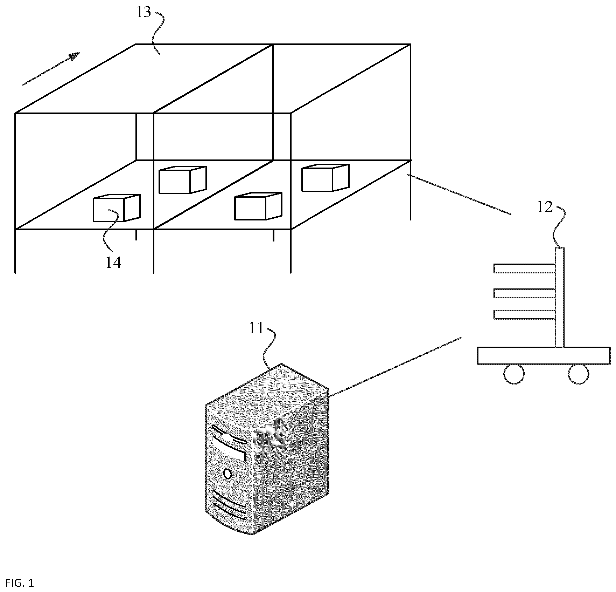

FIG. 1 is a schematic diagram of an application scenario of a warehouse management method according to the present disclosure. As shown in FIG. 1, the scenario includes a scheduling server 11, a robot 12, a multiple-deep shelving unit 13. The multiple-deep shelving unit 13 is a shelving unit including a plurality of warehouse positions in a depth direction of the shelving unit. An arrow in FIG. 1 points to a depth direction of a corresponding shelving unit. FIG. 1 shows a double deep shelving unit in the multiple-deep shelving unit. A second container 14 is placed in an external warehouse position of the double deep shelving unit.

The scheduling server 11 is communicatively connected to the robot 12.

The robot 12 includes at least two racks.

The scheduling server 11 is configured to: determine attribute information of a target warehouse position of a first container, where the attribute information of the target warehouse position includes position information of the target warehouse position; and if the target warehouse position is an internal warehouse position of the multiple-deep shelving unit 13, for example, an internal warehouse position of the double deep shelving unit shown in the figure, and if the second container 14 is placed in the external warehouse position corresponding to the target warehouse position, determine a first rack in a no-load state on a body of the robot 12.

The first container is a container on which the robot 12 is to perform a target operation.

Optionally, the target operation may be a storing operation or may be a delivery operation.

The scheduling server 11 is further configured to: send a first operation instruction to the robot 12 to control the robot 12 to take out the second container and place the second container in the at least one first rack, and send a second operation instruction to the robot 12 to control the robot 12 to perform an operation corresponding to the second operation instruction on the first container.

It may be understood that the internal warehouse position of the multiple-deep shelving unit is any warehouse position other than a warehouse position on the outermost side of the shelving unit, and the external warehouse position is any warehouse position on an outer side of the target warehouse position on the multiple-deep shelving unit.

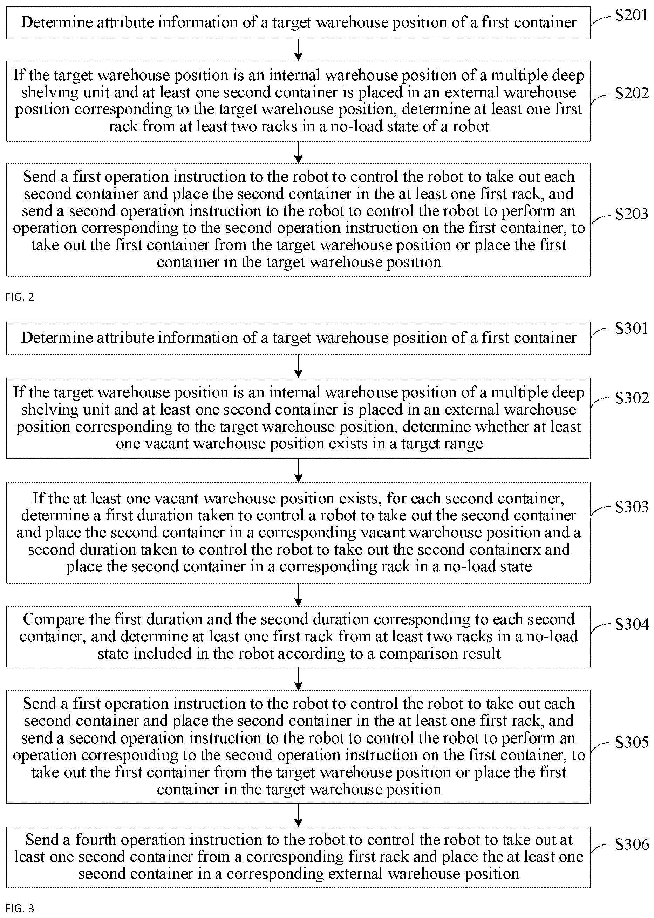

FIG. 2 is a schematic flowchart of a warehouse management method according to the present disclosure. The method is applied to a scheduling server in a warehouse system. As shown in FIG. 2, the method includes:
S201: Determine attribute information of a target warehouse position of a first container.

The attribute information of the target warehouse position includes position information of the target warehouse position.

The attribute information of the target warehouse position may further include a cargo loading state of an external warehouse position corresponding to the target warehouse position.

A multiple-deep shelving unit includes at least two warehouse positions in a depth direction of the multiple-deep shelving unit. Specifically, the multiple-deep shelving unit includes one warehouse position located on the outermost side of the shelving unit and at least one internal warehouse position on an inner side of the warehouse position on the outermost side. The internal warehouse position of the multiple-deep shelving unit is any warehouse position other than the warehouse position on the outermost side of the shelving unit in the depth direction of the shelving unit. One warehouse position on the outermost side corresponds to one or more internal warehouse positions.

When the target warehouse position is an internal warehouse position of the multiple-deep shelving unit, the target warehouse position may correspond to one or more external warehouse positions. In addition, the external warehouse positions correspond to a warehouse position between the warehouse position on the outermost side of the shelving unit and the target warehouse position, and the warehouse position on the outermost side. This explanation is used for all the external warehouse positions in the following content of the present disclosure.

The first container is a container on which the robot is to perform a target operation.

The first operation may be a storing operation or may be a delivery operation.

When the target operation is a delivery operation, the first container is located on the target warehouse position.

The scheduling server may use an interaction interface of the scheduling server to receive the attribute information of the target warehouse position entered by a user or receive the attribute information of the target warehouse position sent by another device; or may determine the attribute information of the target warehouse position through a correspondence list between each container and a warehouse position stored in the scheduling server.

S202: If the target warehouse position is an internal warehouse position of a multiple-deep shelving unit and at least one second container is placed in an external warehouse position corresponding to the target warehouse position, determine at least one first rack from at least two racks in a no-load state of a robot.

The rack on a body of the robot may include a common rack that can load a container at any moment, i.e., a rack that can load a container regardless of whether the robot is in a moving or stationary state; may further include a dedicated rack that is specially used for temporarily storing a container. Such a dedicated rack only temporarily stores the second container when the robot performs the target operation on a first container. After the target operation is completed, the second container in the dedicated rack is removed. In a walking process of the robot, no container is loaded in the dedicated rack.

When the body of the robot only includes the foregoing common rack, the at least one first rack is determined from at least two common racks in a no-load state of the robot.

When the body of the robot includes the foregoing common rack and the foregoing dedicated rack, if the at least two racks in a no-load state of the robot include at least one dedicated rack and one common rack, the at least one first rack is determined from any foregoing dedicated rack; and if the at least two racks in a no-load state of the robot include at least one dedicated rack and at least two common racks, the at least one first rack is determined from the foregoing at least one dedicated rack and at least two common racks.

When the body of the robot includes the foregoing common rack and also includes the foregoing dedicated rack, the position of the dedicated rack may be higher than that of the common rack. In a walking process of the robot, no container is loaded in the dedicated rack, so that the center of gravity of the fully loaded robot can be lowered to reduce shaking during walking, thereby improving the safety of the robot and a container.

In a possible implementation, the determining at least one first rack from at least two racks in a no-load state of a robot includes: acquiring position information of the at least two racks in a no-load state; and determining the at least one first rack from the racks in a no-load state according to the position information of each rack in a no-load state.

The racks in a no-load state include at least two third racks, or include at least one second rack and at least two third racks, or include at least two second racks and at least one third rack.

The second rack is a dedicated rack, and is a rack only used for temporarily storing the second container when the robot needs to perform the target operation on the first container. When the robot includes a second rack, the third rack is a rack other than the second rack in the racks of the robot. When the robot does not include a second rack, the third rack is any rack of the robot.

Optionally, when the racks in a no-load state include one second rack and one third rack, the second rack may be determined as the first rack in the robot and used for temporarily storing the second container.

The scheduling server may acquire position information of all of the at least two racks in a no-load state, or may only acquire position information of some racks.

For example, when the racks in a no-load state include at least two third racks, or include at least one second rack and at least two third racks, the scheduling server may acquire the position information of all the racks in a no-load state; and when the racks in a no-load state include at least two second racks and at least one third rack, the scheduling server may acquire only position information of all second racks in a no-load state.

The position information of the racks is acquired, so that the first rack can be appropriately planned in combination with the position information, to improve the utilization of racks, thereby ensuring that the first operation can be successfully performed.

Further, optionally, the determining the at least one first rack from the racks in a no-load state according to the position information of each rack in a no-load state includes: determining a height difference between each rack in a no-load state and the target warehouse position according to the position information of each rack in a no-load state and the position information of the target warehouse position; and determining the at least one first rack according to an ascending order of height differences between the position information of the racks in a no-load state and the target warehouse position.

As can be learned with reference to the foregoing description, the racks in a no-load state may include the second rack or may include the third rack, and a corresponding first rack may be the second rack or the third rack.

Through the method, a nearby first rack can be selected, to shorten an operation time for the second container, so that an entire processing process is shortened, thereby improving the management efficiency of a warehouse.

Optionally, when the robot only includes one rack in a no-load state and the rack is the third rack, if a vacant warehouse position exists in a target range, the scheduling server may control the robot to take out each second container and place the second container in the vacant warehouse position.

S203: Send a first operation instruction to the robot to control the robot to take out each second container and place the second container in the at least one first rack, and send a second operation instruction to the robot to control the robot to perform an operation corresponding to the second operation instruction on the first container, to take out the first container from the target warehouse position or place the first container in the target warehouse position.

The first operation instruction is used for indicating the robot to take out each second container from the external warehouse position corresponding to the target warehouse position and place the second container in the at least one first rack, in other words, temporarily store each second container in the at least one first rack.

For example, when the target warehouse position corresponds to a plurality of second containers, the robot may take out the second containers one by one and place the second containers in the at least one first rack, or may take out the plurality of second containers in batches and place the second containers in the at least one first rack. One or more second containers may be placed in any first rack.

Optionally, the second operation instruction includes any following instruction: a storing instruction, and a delivery instruction.

When the second operation instruction is a storing instruction, the second operation instruction is used for controlling the robot to carry the first container and place the first container in the target warehouse position. When the second operation instruction is a delivery instruction, the second operation instruction is used for controlling the robot to take out the first container from the target warehouse position and carry the first container to a destination, for example, place the first container in a rack in the robot.

Optionally, the second operation instruction may be sent after the robot finishes performing the first operation instruction, or may be sent simultaneously with the first operation instruction.

Optionally, the first operation instruction includes position information of the first rack and attribute information of each second container. The attribute information of the second container may include position information of a warehouse position in which the second container is located, size information of a container, and the like.

Optionally, when the body of the robot does not have at least two racks in a no-load state or only has one rack in a no-load state, the robot may be controlled to take out each second container and place the second container in the vacant warehouse position, in other words, temporarily store each second container on the shelving unit. Optionally, a vacant warehouse position near the target warehouse position may be selected to temporarily store the second container.

Optionally, when a quantity of racks in a no-load state on the body of the robot is less than a quantity of second containers, the robot may be controlled to take out each second container and place the second container in the vacant warehouse position; or the robot may be controlled to take out the second containers, place some second containers in a rack in a no-load state, and place other second containers in the vacant warehouse positions. Optionally, it may be determined, according to a first duration and a second duration corresponding to each second rack, whether to place the second rack in the vacant warehouse position or a rack in a no-load state.

In the warehouse management method provided in the present disclosure, attribute information of a target warehouse position of a first container is determined; if the target warehouse position is an internal warehouse position of a multiple-deep shelving unit and at least one second container is placed in an external warehouse position corresponding to the target warehouse position, a first rack in a no-load state on a body of a robot is determined; and a first operation instruction is sent to the robot to control the robot to take out each second container and place the second container in at least one first rack, and a second operation instruction is sent to the robot to control the robot to perform an operation corresponding to the second operation instruction on the first container, so that a rack on the body of the robot can be used as a medium to temporarily store a container in the external warehouse position of the multiple-deep shelving unit. A novel warehouse management method is provided, and through the method, a warehouse system can be optimized, a quantity of robots in warehouses can be reduced, the processing difficulty of a scheduling server and the management difficulty of warehouses can be reduced, and management costs can be reduced.

FIG. 3 is another schematic flowchart of a warehouse management method according to the present disclosure. The method is applied to a scheduling server in a warehouse system. Based on the embodiment shown in FIG. 2, how to determine a first rack in a no-load state on a body of a robot is further described in detail in FIG. 3. As shown in FIG. 3, the method includes:
S301: Determine attribute information of a target warehouse position of a first container.
S301 has the same or corresponding technical features as S201. For detailed description, refer to S201. Details are not described herein.
S302: If the target warehouse position is an internal warehouse position of a multiple-deep shelving unit and at least one second container is placed in an external warehouse position corresponding to the target warehouse position, determine whether at least one vacant warehouse position exists in a target range.

The vacant warehouse position is a warehouse position in a no-load state, and may be specifically a warehouse position on the outermost side of the shelving unit or may be an internal warehouse position of the shelving unit. When the vacant warehouse position is an internal warehouse position, an external warehouse position corresponding to the internal warehouse position also needs to be in a no-load state.

The target range may be a preset range corresponding to the target warehouse position, or may be a preset range corresponding to the second container.

The scheduling server may use an image acquisition unit of the scheduling server to determine whether a vacant warehouse position exists in the target range, or may acquire information entered by a user and determine, according to the information entered by the user, whether a vacant warehouse position exists in the target range. This is not limited herein.

S303: If the at least one vacant warehouse position exists, for each second container, determine a first duration taken to control a robot to take out the second container and place the second container in a corresponding vacant warehouse position and a second duration taken to control the robot to take out the second container and place the second container in a corresponding rack in a no-load state.

Optionally, during the calculation of the first duration, the vacant warehouse position corresponding to the second container may include one or more vacant warehouse positions in the target range. Correspondingly, any second container may correspond to one or more first durations.

When the second container corresponds to one vacant warehouse position, the vacant warehouse position may be selected from the at least one vacant warehouse position according to a preset rule. The preset rule may be that the warehouse position has the smallest distance from a warehouse position in which the second container is located, or the second container corresponding to the warehouse position has the smallest first duration.

During the calculation of the second duration, the rack in a no-load state corresponding to the second container may include some or all racks in a no-load state. When the rack in a no-load state corresponding to the second container is some racks in a no-load state, for example, the rack in a no-load state corresponding to the second container is one rack in a no-load state, the rack may be selected from a plurality of racks in a no-load state according to a preset rule. For example, the rack is a rack with the minimum height difference from a rack in which the second container is located. In another example, the rack corresponds to the shortest second duration.

For example, the determining a first duration taken to control a robot to take out the second container and place the second container in a corresponding vacant warehouse position may be: determining a plurality of first durations taken to control the robot to take out the second container and place the second container in each vacant warehouse positions; or may be: determining a first duration taken to control the robot to take out the second container and place the second container in a vacant warehouse position closest to the second container.

For example, the determining a second duration taken to control the robot to take out the second container and place the second container in a corresponding rack in a no-load state may be: determining a plurality of second durations taken to control the robot to take out the second container and place the second container in racks in a no-load state; or may be: determining a second duration taken to control the robot to take out the second container and place the second container in a rack that has the minimum height difference from the second container and is in a no-load state.

Optionally, any second container may correspond to a plurality of first durations and a plurality of second durations, or correspond to one first duration and one second duration, or correspond to one first duration and a plurality of second durations, or correspond to a plurality of first durations and one second duration.

Optionally, for each second container, the first duration may be a total time taken to control the robot to take out the second container and place the second container in a corresponding vacant warehouse position, then control the robot to perform a first operation on the first container, and take out the second container from the corresponding vacant warehouse position and place the second container in a corresponding warehouse position after the first operation is completed. The warehouse position may be the original warehouse position of the second container or may be another warehouse position.

The second duration may be a total time taken to control the robot to take out the second container and place the second container in a corresponding rack in a no-load state, then control the robot to perform the first operation on the first container, and take out the second container from the vacant rack and place the second container on the shelving unit after the first operation is completed. Optionally, the second container may be placed back in the original warehouse position or may not be placed back in the original warehouse position.

Optionally, for each second container, the first duration may be a sum of a time taken to control the robot to take out the second container and place the second container in a corresponding vacant warehouse position and a time taken to control the robot to take out the second container from the corresponding vacant warehouse position and place the second container in a corresponding warehouse position. The warehouse position may be the original warehouse position of the second container or may be another warehouse position.

The second duration may be a sum of a time taken to control the robot to take out the second container and place the second container in a corresponding rack in a no-load state and a time taken to control the robot to take out the second container from the corresponding rack in a no-load state and place the second container on the shelving unit. Optionally, the second container may be placed back in the original warehouse position or may not be placed back in the original warehouse position.

S304: Compare the first duration and the second duration corresponding to each second container, and determine at least one first rack from at least two racks in a no-load state of the robot according to a comparison result of the first duration being greater than or equal to the second duration.

Optionally, if the first duration corresponding to each second container is greater than or equal to the second duration corresponding to the second container, the at least one first rack is determined from the at least two racks in a no-load state of the robot, and the at least one first rack is used for temporarily storing each second container.

Further, as discussed above, any second container may correspond to a plurality of second durations, for any second container, if the first duration corresponding to each second container is greater than or equal to all the second durations corresponding to the second container, the determining at least one first rack from at least two racks in a no-load state of the robot may be specifically: determining a rack corresponding to the shortest second duration in the plurality of second durations corresponding to the second container as the first rack corresponding to the second container. Any second container may only correspond to one second duration, and correspondingly, the rack corresponding to the second duration is determined as the first rack corresponding to the second container.

Optionally, if a first class container with a corresponding first duration greater than or equal to a corresponding second duration and a second class container with a corresponding first duration less than a corresponding second duration exist in the second container, the at least one first rack is determined from the at least two racks in a no-load state of the robot. The at least one first rack is used for temporarily storing the first class container, and the second class container may be temporarily stored in a vacant warehouse position.

If the first duration corresponding to each second container is less than the second duration corresponding to the second container, the second container is temporarily stored in a vacant warehouse position.

Further, as discussed above, any second container may correspond to a plurality of first durations, if the first durations corresponding to the second container are all less than the second duration corresponding to the second container, the temporarily storing the second container in the vacant warehouse position may be specifically: determining a rack corresponding to the shortest first duration in the plurality of first durations corresponding to the second container as a vacant warehouse position used for temporarily storing the second container, and temporarily storing the second container in the vacant warehouse position. Any second container may only correspond to one first duration, and correspondingly, the second container is temporarily stored in the vacant warehouse position corresponding to the first duration.

Optionally, the method further includes: for any second container, if the first duration is less than the second duration, send a third operation instruction to the robot to control the robot to take out the second container and place the second container in a corresponding vacant warehouse position.

If the first duration is less than the second duration, it indicates that a time taken to use the vacant warehouse position as a medium to temporarily store the second container is less than a time taken to use a rack on the body of the robot as a medium to temporarily store the second container. Therefore, when the first duration is less than the second duration, the robot is controlled to take out each second container and place the second container in a vacant warehouse position, and an operation on the second container can be completed within a short time, to shorten an entire processing process, thereby improving the management efficiency of a warehouse.

S305: Send a first operation instruction to the robot to control the robot to take out each second container and place the second container in the at least one first rack, and send a second operation instruction to the robot to control the robot to perform an operation corresponding to the second operation instruction on the first container, to take out the first container from the target warehouse position or place the first container in the target warehouse position.

S305 has the same or corresponding technical features as S203. For detailed description, refer to S203. Details are not described herein.

Optionally, the method further includes:
S306: Send a fourth operation instruction to the robot to control the robot to take out at least one second container from a corresponding first rack and place the at least one second container in a corresponding external warehouse position.

Through the method, the position of the second container can be restored after the target operation has been performed on the first container, so that warehouse management can be facilitated to improve the management efficiency of a warehouse, the load of the robot can be reduced, and the utilization of racks in the robot can be improved.

In the warehouse management method provided in the present disclosure, based on the foregoing embodiment, it is further determined whether at least one vacant warehouse position exists in a target range; if the at least one vacant warehouse position exists, for each second container, a first duration taken to control a robot to take out the second container and place the second container in a corresponding vacant warehouse position and a second duration taken to control the robot to take out the second container and place the second container in a corresponding rack in a no-load state are determined; the first duration and the second duration corresponding to each second container are compared, and at least one first rack is determined from at least two racks in a no-load state of the robot according to a comparison result; and a first operation instruction is sent to the robot to control the robot to take out each second container and place the second container in the at least one first rack, and a second operation instruction is sent to the robot to control the robot to perform an operation corresponding to the second operation instruction on a first container, so that an execution time of a first operation performed on the second container can be effectively shortened, the efficiency of warehouse management can be improved, and the processing efficiency and utilization of the robot can be improved.

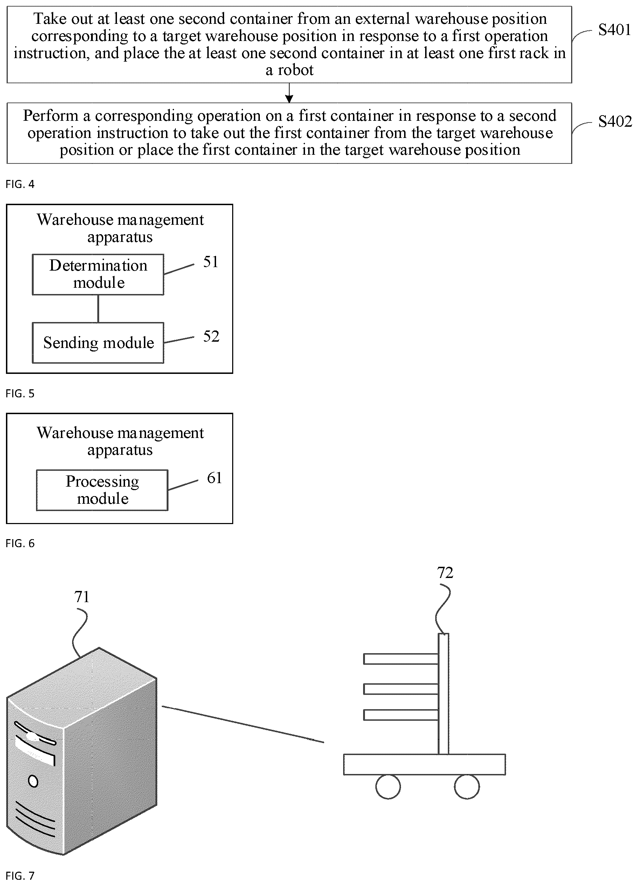

FIG. 4 is still another schematic flowchart of a warehouse management method according to the present disclosure. The method is applied to a robot in a warehouse system, and the robot includes at least two racks in a no-load state. As shown in FIG. 4, the method includes:
S401: Take out at least one second container from an external warehouse position corresponding to a target warehouse position in response to a first operation instruction, and place the at least one second container in at least one first rack in the robot.

Optionally, the first operation instruction includes position information of the first rack and attribute information of each second container. The attribute information of the second container may include position information of a warehouse position in which the second container is located, size information of a container, and the like.

Optionally, when the racks in a no-load state include at least two third racks, or include at least one second rack and at least two third racks, the first rack in the robot is a rack that is in the racks in a no-load state and has the smallest height difference from the target warehouse position.

S402: Perform an operation on a first container in response to a second operation instruction to take out the first container from the target warehouse position or place the first container in the target warehouse position.

The first operation instruction and the second operation instruction are generated and sent by a scheduling server when the target warehouse position of the first container is an internal warehouse position located in a multiple-deep shelving unit and at least one second container is placed in the external warehouse position corresponding to the target warehouse position.

The second operation instruction may be a delivery instruction, or may be a storing instruction.

When the second operation instruction is a delivery instruction, the corresponding operation performed by the robot on the first container includes taking out the first container from the target warehouse position; and when the second operation instruction is a storing instruction, the corresponding operation performed by the robot on the first container includes placing the first container in the target warehouse position.

Optionally, the second operation instruction may be received after the robot finishes performing the first operation instruction, or may be received simultaneously with the first operation instruction.

Optionally, the performing a corresponding operation on a first container includes: if the second operation instruction is a storing instruction, taking out the first container from a rack in the robot, and placing the first container in the target warehouse position; and if the second operation instruction is a delivery instruction, taking out the first container from the target warehouse position, and placing the first container in a fourth rack in the robot. The fourth rack is a third rack in a no-load state in the racks in the robot.

Optionally, the method further includes: taking out a target second container in response to a third operation instruction, and placing the target second container in a corresponding vacant warehouse position.

The third operation instruction is generated and sent by the scheduling server when a first duration corresponding to the target second container is less than a second duration corresponding to the target second container.

Optionally, any second container may correspond to a plurality of first durations and a plurality of second durations, or correspond to one first duration and one second duration, or correspond to one first duration and a plurality of second durations, or correspond to a plurality of first durations and one second duration.

Optionally, for each second container, the first duration is a total time taken to control the robot to take out the second container and place the second container in a corresponding vacant warehouse position, then control the robot to perform a first operation on the first container, and take out the second container from the corresponding vacant warehouse position and place the second container in a corresponding external warehouse position after the first operation is completed.

The second duration is a total time taken to control the robot to take out the second container and place the second container in a corresponding rack in a no-load state, then control the robot to perform the first operation on the first container, and take out the second container from the vacant warehouse position and place the second container in the external warehouse position corresponding to the target warehouse position after the first operation is completed.

Optionally, for each second container, the first duration is a sum of a time taken to control the robot to take out the second container and place the second container in a corresponding vacant warehouse position and a time taken to control the robot to take out the second container from the corresponding vacant warehouse position and place the second container in a corresponding external warehouse position.

The second duration is a sum of a time taken to control the robot to take out the second container and place the second container in a corresponding rack in a no-load state and a time taken to control the robot to take out the second container from the corresponding rack in a no-load state and place the second container on the external warehouse position corresponding to the target warehouse position.

Optionally, the method further includes: taking out each second container from a corresponding first rack in response to a fourth operation instruction, and placing the second container in a corresponding external warehouse position.

In the warehouse management method provided in the present disclosure, a second container is taken out in response to a first operation instruction, and is placed in a first rack in a robot; and a corresponding operation is performed on a first container in response to a second operation instruction, so that an empty rack on a body of the robot can be used as a medium to temporarily store a container in an external warehouse position of a multiple-deep shelving unit. A novel warehouse management method is provided, and through the method, a warehouse system can be optimized, a quantity of robots can be reduced, the processing difficulty of a scheduling server and the management difficulty of warehouses can be reduced, and management costs can be reduced.

FIG. 5 is a schematic structural diagram of a warehouse management apparatus according to the present disclosure. As shown in FIG. 5, the apparatus includes:
a determination module 51, configured to determine attribute information of a target warehouse position of a first container, where the attribute information of the target warehouse position includes position information of the target warehouse position, and the first container is a container on which a robot is to perform a target operation;
the determination module 51 being further configured to: if the target warehouse position is an internal warehouse position of a multiple-deep shelving unit and at least one second container is placed in an external warehouse position corresponding to the target warehouse position, determine at least one first rack from at least two racks in a no-load state of the robot; and
a sending module 52, configured to: send a first operation instruction to the robot to control the robot to take out each second container and place the second container in the at least one first rack, and send a second operation instruction to the robot to control the robot to perform an operation corresponding to the second operation instruction on the first container, to take out the first container from the target warehouse position or place the first container in the target warehouse position.

Optionally, the determination module 51 is further configured to: determine whether at least one vacant warehouse position exists in a target range; if the at least one vacant warehouse position exists, for each second container, determining a first duration taken to control the robot to take out the second container and place the second container in a corresponding vacant warehouse position and a second duration taken to control the robot to take out the second container and place the second container in a corresponding rack in a no-load state; and compare the first duration and the second duration corresponding to each second container, and determine the at least one first rack from the at least two racks in a no-load state of the robot according to a comparison result of the first duration being greater than or equal to the second duration.

Optionally, the determination module 51 is configured to: acquire position information of the at least two racks in a no-load state, where the racks in a no-load state include at least two third racks, or include at least one second rack and at least two third racks, or include at least two second racks and at least one third rack, the second rack is a rack only used for temporarily storing the second container when the robot needs to perform the target operation on the first container, when the robot includes a second rack, the third rack is a rack other than the second rack in the racks in the robot, and when the robot does not include a second rack, the third rack is any rack in the robot; and determine the at least one first rack from the racks in a no-load state according to the position information of each rack in a no-load state.

Optionally, the determination module 51 is further configured to: determine a height difference between each rack in a no-load state and the target warehouse position according to the position information of each rack in a no-load state and the position information of the target warehouse position; and determine the at least one first rack according to an ascending order of height differences between the position information of the racks in a no-load state and the target warehouse position.

Optionally, the sending module 51 is further configured to: according to the comparison result of the first duration being less than the second duration, send a third operation instruction to the robot to control the robot to take out a target second container and place the target second container in a corresponding vacant warehouse position, where the target second container is a second container with the corresponding first duration less than the corresponding second duration.

Optionally, the second operation instruction includes any following instruction: a storing instruction, and a delivery instruction.

Optionally, the sending module 52 is further configured to send a fourth operation instruction to the robot to control the robot to take out each second container from a corresponding first rack and place the second container in a corresponding external warehouse position.

The warehouse management apparatus may perform the foregoing warehouse management method shown in FIG. 2 or FIG. 3. For the content and effect of the warehouse management apparatus, refer to the method embodiment part. Details are not described again.

FIG. 6 is another schematic structural diagram of a warehouse management apparatus according to the present disclosure. As shown in FIG. 6, the apparatus includes:
a processing module 61, configured to: take out a second container from an external warehouse position corresponding to a target warehouse position in response to a first operation instruction, and place the second container in a first rack in the robot; and perform an operation on a first container in response to a second operation instruction to take out the first container from the target warehouse position or place the first container in the target warehouse position, where the first operation instruction and the second operation instruction are generated and sent by a scheduling server when the target warehouse position of the first container is an internal warehouse position located in a multiple-deep shelving unit and at least one second container is placed in the external warehouse position corresponding to the target warehouse position.

Optionally, the second operation instruction includes: a storing instruction, and a delivery instruction.

Optionally, when the racks in a no-load state include at least two third racks, or include at least one second rack and at least two third racks, or include at least two second racks and at least one third rack, the first rack in the robot is determined according to position information of the racks in a no-load state.

Optionally, the processing module 61 is further configured to: take out a target second container in response to a third operation instruction, and place the target second container in a corresponding vacant warehouse position, where the third operation instruction is generated and sent by the scheduling server when a first duration corresponding to the target second container is less than a second duration corresponding to the target second container, the first duration is a time taken for the scheduling server to control the robot to take out the second container and place the second container in the corresponding vacant warehouse position, and the second duration is a time taken for the scheduling server to control the robot to take out the second container and place the second container in a corresponding rack in a no-load state.

Optionally, the processing module 61 is further configured to: take out each second container from a corresponding first rack in response to a fourth operation instruction, and place the second container in a corresponding external warehouse position.

The warehouse management apparatus may perform the foregoing warehouse management method shown in FIG. 4. For the content and effect of the warehouse management apparatus, refer to the method embodiment part. Details are not described again.

FIG. 7 is a schematic structural diagram of a warehouse management system according to the present disclosure. As shown in FIG. 7, the system includes a scheduling server 71 and a robot 72, where the scheduling server 71 is communicatively connected to the robot 72.

The scheduling server 71 is configured to: determine attribute information of a target warehouse position of a first container, where the attribute information of the target warehouse position includes position information of the target warehouse position, and the first container is a container on which the robot is to perform a first operation; and if the target warehouse position is an internal warehouse position of a multiple-deep shelving unit and at least one second container is placed in an external warehouse position corresponding to the target warehouse position, determine at least one first rack from at least two racks in a no-load state of the robot, and send a first operation instruction and a second operation instruction to the robot 72; and

the robot 72 is configured to: take out the second container and place the at least one second container in the at least one first rack in response to the first operation instruction, and perform an operation corresponding to the second operation instruction on the first container in response to the second operation instruction to take out the first container from the target warehouse position or place the first container in the target warehouse position.

Optionally, the scheduling server 71 is further configured to: determine whether at least one vacant warehouse position exists in a target range; if the at least one vacant warehouse position exists, for each second container, determining a first duration taken to control the robot to take out the second container and place the second container in a corresponding vacant warehouse position and a second duration taken to control the robot to take out the second container and place the second container in a corresponding rack in a no-load state; and compare the first duration and the second duration corresponding to each second container, and determine the at least one first rack from the at least two racks in a no-load state of the robot according to a comparison result.

Optionally, the scheduling server 71 is configured to: acquire position information of the at least two racks in a no-load state, where the racks in a no-load state include at least two third racks, or include at least one second rack and at least two third racks, or include at least two second racks and at least one third rack, the second rack is a rack only used for temporarily storing the second container when the robot needs to perform the first operation on the first container, when the robot includes a second rack, the third rack is a rack other than the second rack in the racks in the robot, and when the robot does not include a second rack, the third rack is any rack in the robot; and determine the at least one first rack from the racks in a no-load state according to the position information of each rack in a no-load state.

Optionally, the scheduling server 71 is further configured to: determine a height difference between each rack in a no-load state and the target warehouse position according to the position information of each rack in a no-load state and the position information of the target warehouse position; and determine the at least one first rack according to an ascending order of height differences between the position information of the racks in a no-load state and the target warehouse position.

Optionally, the scheduling server 71 is further configured to send a third operation instruction to the robot.

The robot 72 is further configured to: take out a target second container in response to a third operation instruction, and place the target second container in a corresponding vacant warehouse position, where the target second container is a second container with the corresponding second duration greater than the corresponding first duration.

Optionally, the second operation instruction includes any following instruction: a storing instruction, and a delivery instruction.

Optionally, the scheduling server 71 is further configured to send a fourth operation instruction to the robot.

The robot 72 is further configured to: take out each second container from a corresponding first rack in response to a fourth operation instruction, and place the second container in a corresponding external warehouse position.

The warehouse management system may perform the foregoing warehouse management method. For the content and effect of the warehouse management system, refer to the method embodiment part. Details are not described again.

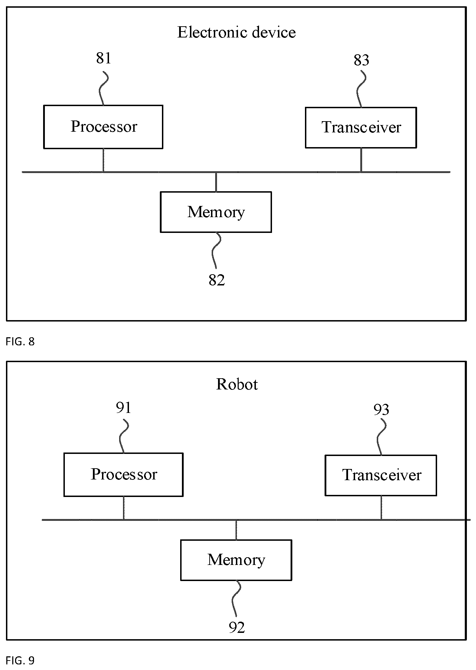

FIG. 8 is a schematic structural diagram of an electronic device according to the present disclosure. As shown in FIG. 8, the electronic device of this embodiment includes: a processor 81 and a memory 82. The processor 81 is communicatively connected to the memory 82. The memory 82 is configured to store a computer program. The processor 81 is configured to invoke the computer program stored in the memory 82, to implement the methods in the foregoing embodiments.

Optionally, the electronic device further includes a transceiver 83, configured to implement communication with another device.

The electronic device may perform the foregoing warehouse management method shown in FIG. 2 or FIG. 3. For the content and effect of the electronic device, refer to the method embodiment part. Details are not described again.

FIG. 9 is a schematic structural diagram of a robot according to the present disclosure. As shown in FIG. 9, the robot of this embodiment includes: a processor 91 and a memory 92. The processor 91 is communicatively connected to the memory 92. The memory 92 is configured to store a computer program. The processor 91 is configured to invoke the computer program stored in the memory 92, to implement the methods in the foregoing embodiments.

Optionally, the robot further includes a transceiver 93, configured to implement communication with another device.

The robot may perform the foregoing warehouse management method shown in FIG. 4. For the content and effect of the robot, refer to the method embodiment part. Details are not described again.

The present disclosure further provides a computer-readable storage medium. The computer-readable storage medium stores computer-executable instructions, and the computer-executable instructions, when being executed by a processor, implement the foregoing method in any method embodiment.

The computer-executable instructions stored in the computer-readable storage medium, when being executed by the processor, can implement the foregoing warehouse management method. For the content and effect of the computer-readable storage medium, refer to the method embodiment part. Details are not described again.

The present disclosure further provides a computer program product, including a computer program/instructions, where the computer program/instructions, when being executed by a processor, implement the foregoing method in any method embodiment.

The computer-executable instructions stored in the computer-readable storage medium, when being executed by the processor, can implement the foregoing warehouse management method. For the content and effect of the computer program product, refer to the method embodiment part. Details are not described again.

Finally, it should be noted that the foregoing embodiments are merely used for describing the technical solutions of the present disclosure, but are not intended to limit the present disclosure.

## Claims

1. A warehouse management method, applicable to a scheduling server (11) in a warehouse system, comprising:
determining (S201, S301) attribute information of a target warehouse position of a first container, wherein the attribute information of the target warehouse position comprises position information of the target warehouse position, and the first container is a container on which a robot is to perform a target operation;
if the target warehouse position is an internal warehouse position of a multiple-deep shelving unit and at least one second container is placed in an external warehouse position corresponding to the target warehouse position, determining (S202) at least one first rack from at least two racks in a no-load state of the robot;
sending (S203, S305) a first operation instruction to the robot to control the robot to take out each second container and place the second container in the at least one first rack, and
sending (S203, S305) a second operation instruction to the robot to control the robot to perform an operation corresponding to the second operation instruction on the first container, to take out the first container from the target warehouse position or place the first container in the target warehouse position;
**characterized by**
wherein the determining at least one first rack from at least two racks in a no-load state of the robot comprises:
determining (S302) whether at least one vacant warehouse position exists in a target range;
if the at least one vacant warehouse position exists, for each second container, determining (S303) a first duration taken to control the robot to take out the second container and place the second container in a corresponding vacant warehouse position and a second duration taken to control the robot to take out the second container and place the second container in a corresponding rack in a no-load state;
comparing (S304) the first duration and the second duration corresponding to each second container, and
determining the at least one first rack from the at least two racks in a no-load state of the robot according to a comparison result of the first duration being greater than or equal to the second duration.

2. The method according to claim 1, wherein the determining at least one first rack from at least two racks in a no-load state comprises:
acquiring position information of the at least two racks in a no-load state, wherein the racks in a no-load state comprise at least two third racks, or comprise at least one second rack and at least two third racks, or comprise at least two second racks and at least one third rack, the second rack is a rack only configured to temporarily store the second container when the robot needs to perform the target operation on the first container; when the robot comprises a second rack, the third rack is a rack other than the second rack in the racks of the robot; and when the robot does not comprise a second rack, the third rack is any rack of the robot; and
determining the at least one first rack from the racks in a no-load state according to the position information of each rack in a no-load state.

3. The method according to claim 2, wherein the determining the at least one first rack from the racks in a no-load state according to the position information of each rack in a no-load state comprises:
determining a height difference between each rack in a no-load state and the target warehouse position according to the position information of each rack in a no-load state and the position information of the target warehouse position; and
determining the at least one first rack according to an ascending order of height differences between the position information of the racks in a no-load state and the target warehouse position.

4. The method according to claim 1, wherein the method further comprises:
according to the comparison result of the first duration being less than the second duration, sending a third operation instruction to the robot to control the robot to take out a target second container and place the target second container in a corresponding vacant warehouse position, wherein the target second container is a second container with the corresponding first duration less than the corresponding second duration.

5. The method according to any one of claims 1 to 4, wherein the method further comprises:
sending (S306) a fourth operation instruction to the robot to control the robot to take out each second container from a corresponding first rack and place the second container in a corresponding external warehouse position.

6. A warehouse management method, applicable to a robot in a warehouse system, the robot comprising at least two racks in a no-load state, comprising:
taking out (S401) at least one second container from an external warehouse position corresponding to a target warehouse position in response to a first operation instruction, and placing the at least one second container in at least one first rack in the robot; and
performing (S402) an operation on a first container in response to a second operation instruction to take out the first container from the target warehouse position or place the first container in the target warehouse position;
wherein the first operation instruction and the second operation instruction are generated and sent by a scheduling server when the target warehouse position of the first container is an internal warehouse position located in a multiple-deep shelving unit and at least one second container is placed in the external warehouse position corresponding to the target warehouse position;
**characterized by**
wherein the first operation instruction is generated and sent by the scheduling server when a first duration corresponding to the target second container is greater than or equal to a second duration corresponding to the target second container, the first duration is a time taken for the scheduling server to control the robot to take out the second container and place the second container in the corresponding vacant warehouse position, and the second duration is a time taken for the scheduling server to control the robot to take out the second container and place the second container in a corresponding rack in a no-load state.

7. The method according to claim 6, wherein when the racks in a no-load state comprise at least two third racks, or comprise at least one second rack and at least two third racks, or comprise at least two second racks and at least one third rack, the at least one first rack in the robot is determined according to position information of the racks in a no-load state.

8. The method according to claim 6 or 7, wherein the method further comprises:
taking out a target second container in response to a third operation instruction, and placing the target second container in a corresponding vacant warehouse position, wherein the third operation instruction is generated and sent by the scheduling server when a first duration corresponding to the target second container is less than a second duration corresponding to the target second container, the first duration is a time taken for the scheduling server to control the robot to take out the second container and place the second container in the corresponding vacant warehouse position, and the second duration is a time taken for the scheduling server to control the robot to take out the second container and place the second container in a corresponding rack in a no-load state.

9. The method according to any one of claims 6 to 8, wherein the method further comprises: taking out each second container from a corresponding first rack in response to a fourth operation instruction, and placing the second container in a corresponding external warehouse position.

10. A scheduling server (11), comprising:
a determination module (51), configured to determine attribute information of a target warehouse position of a first container, wherein the attribute information of the target warehouse position comprises position information of the target warehouse position, and the first container is a container on which a robot is to perform a target operation;
the determination module (51) being further configured to: if the target warehouse position is an internal warehouse position of a multiple-deep shelving unit and at least one second container is placed in an external warehouse position corresponding to the target warehouse position, determine at least one first rack from at least two racks in a no-load state of the robot; and
a sending module (52), configured to: send a first operation instruction to the robot to control the robot to take out each second container and place the second container in the first rack, and send a second operation instruction to the robot to control the robot to perform an operation corresponding to the second operation instruction on the first container, to take out the first container from the target warehouse position or place the first container in the target warehouse position;
**characterized by** wherein the determination module (51) is further configured to:
determine whether at least one vacant warehouse position exists in a target range;
if the at least one vacant warehouse position exists, for each second container, determine a first duration taken to control the robot to take out the second container and place the second container in a corresponding vacant warehouse position and a second duration taken to control the robot to take out the second container and place the second container in a corresponding rack in a no-load state;
compare the first duration and the second duration corresponding to each second container, and
determine the at least one first rack from the at least two racks in a no-load state of the robot according to a comparison result of the first duration being greater than or equal to the second duration.

11. A warehouse management system, comprising a scheduling server (11) according to claim 10 and a robot (12), wherein the scheduling server (11) is communicatively connected to the robot (12) and the robot comprises
a processing module (61), configured to: take out a second container from an external warehouse position corresponding to a target warehouse position in response to a first operation instruction, and place the second container in a first rack in a robot; and perform an operation on a first container in response to a second operation instruction to take out the first container from the target warehouse position or place the first container in the target warehouse position, wherein the first operation instruction and the second operation instruction are generated and sent by a scheduling server when the target warehouse position of the first container is an internal warehouse position located in a multiple-deep shelving unit and at least one second container is placed in the external warehouse position corresponding to the target warehouse position;
**characterized by**
wherein the first operation instruction is generated and sent by the scheduling server when a first duration corresponding to the target second container is greater than or equal to a second duration corresponding to the target second container, the first duration is a time taken for the scheduling server to control the robot to take out the second container and place the second container in the corresponding vacant warehouse position, and the second duration is a time taken for the scheduling server to control the robot to take out the second container and place the second container in a corresponding rack in a no-load state.

12. A computer-readable storage medium, wherein the computer-readable storage medium is configured to store computer-executable instructions, and the computer-executable instructions, when executed by a processor, implement the method according to any one of claims 1 to 5.

13. A computer program product, comprising a computer program, wherein the computer program, when executed by a processor, implements the method according to any one of claims 1 to 5.

## Patentansprüche

1. Lagerverwaltungsverfahren, anwendbar auf einen Planungsserver (11) in einem Lagersystem, umfassend:
Bestimmen (S201, S301) von Attributinformationen einer Ziel-Lagerposition eines ersten Behälters, wobei die Attributinformationen der Ziel-Lagerposition Positionsinformationen der Ziel-Lagerposition umfassen und der erste Behälter ein Behälter ist, an dem ein Roboter einen Zielvorgang ausführen soll;
wenn die Ziel-Lagerposition eine interne Lagerposition einer mehrfach tiefen Regaleinheit ist und mindestens ein zweiter Behälter in einer der Ziel-Lagerposition entsprechenden externen Lagerposition positioniert ist, Bestimmen (S202) mindestens eines ersten Gestells aus mindestens zwei Gestellen im unbeladenen Zustand des Roboters;
Senden (S203, S305) einer ersten Vorgangsanweisung an den Roboter, um den Roboter so zu steuern, dass er jeden zweiten Behälter entnimmt und den zweiten Behälter in das mindestens eine erste Gestell stellt, und
Senden (S203, S305) einer zweiten Arbeitsanweisung an den Roboter, um den Roboter so zu steuern, dass er einen der zweiten Arbeitsanweisung entsprechenden Vorgang am ersten Behälter ausführt, um den ersten Behälter aus der Ziel-Lagerposition zu entnehmen oder den ersten Behälter in die Ziel-Lagerposition zu stellen;
**gekennzeichnet durch**
wobei das Bestimmen mindestens eines ersten Gestells aus mindestens zwei Gestellen im unbeladenen Zustand des Roboters umfasst:
Bestimmen (S302), ob mindestens eine freie Lagerposition in einem Zielbereich vorhanden ist;
wenn die mindestens eine freie Lagerposition vorhanden ist, für jeden zweiten Behälter Bestimmen (S303) einer ersten Dauer, die benötigt wird, um den Roboter so zu steuern, dass er den zweiten Behälter entnimmt und in eine entsprechende freie Lagerposition stellt, und einer zweiten Dauer, die benötigt wird, um den Roboter so zu steuern, dass er den zweiten Behälter entnimmt und in ein entsprechendes Gestell in unbeladenem Zustand stellt;
Vergleichen (S304) der ersten Dauer mit der zweiten Dauer entsprechend jedem zweiten Container, und
Bestimmen des mindestens einen ersten Gestells aus den mindestens zwei Gestellen im unbeladenen Zustand des Roboters gemäß einem Vergleichsergebnis, wonach die erste Dauer größer oder gleich der zweiten Dauer ist.

2. Verfahren nach Anspruch 1, wobei das Bestimmen mindestens eines ersten Gestells aus mindestens zwei Gestellen im unbeladenen Zustand umfasst:
Erfassen von Positionsdaten der mindestens zwei Gestelle im unbeladenen Zustand, wobei die Gestelle im unbeladenen Zustand mindestens zwei dritte Gestelle umfassen oder mindestens ein zweites Gestell und mindestens zwei dritte Gestelle umfassen oder mindestens zwei zweite Gestelle und mindestens ein drittes Gestell umfassen, das zweite Gestell ein Gestell ist, das ausschließlich dazu konfiguriert ist, den zweiten Behälter vorübergehend zu lagern, wenn der Roboter den Zielvorgang am ersten Behälter ausführen muss; wobei, wenn der Roboter ein zweites Gestell umfasst, das dritte Gestell ein anderes Gestell als das zweite Gestell unter den Gestellen des Roboters ist; und wenn der Roboter kein zweites Gestell umfasst, das dritte Gestell ein beliebiges Gestell des Roboters ist; und
Bestimmen des mindestens einen ersten Gestells aus den Gestellen im unbeladenen Zustand anhand der Positionsdaten jedes Gestells im unbeladenen Zustand.

3. Verfahren nach Anspruch 2, wobei das Bestimmen des mindestens einen ersten Gestells aus den Gestellen im unbeladenen Zustand gemäß den Positionsinformationen jedes Gestells im unbeladenen Zustand umfasst:
Bestimmen eines Höhenunterschieds zwischen jedem Gestell im unbeladenen Zustand und der Ziellagerposition gemäß den Positionsinformationen jedes Gestells im unbeladenen Zustand und den Positionsinformationen der Ziellagerposition; und
Bestimmen des mindestens einen ersten Gestells gemäß einer aufsteigenden Reihenfolge der Höhenunterschiede zwischen den Positionsinformationen der Gestelle im unbeladenen Zustand und der Ziellagerposition.

4. Verfahren nach Anspruch 1, wobei das Verfahren ferner umfasst:
gemäß dem Vergleichsergebnis, wonach die erste Dauer kürzer ist als die zweite Dauer, Senden einer dritten Vorgangsanweisung an den Roboter, um den Roboter so zu steuern, dass er einen zweiten Zielbehälter entnimmt und den zweiten Zielbehälter an einem entsprechenden freien Lagerplatz abstellt, wobei der zweite Zielbehälter ein zweiter Behälter ist, bei dem die entsprechende erste Dauer kürzer ist als die entsprechende zweite Dauer.

5. Verfahren nach einem der Ansprüche 1 bis 4, wobei das Verfahren ferner umfasst:
Senden (S306) einer vierten Vorgangsanweisung an den Roboter, um den Roboter so zu steuern, dass er jeden zweiten Behälter aus einem entsprechenden ersten Gestell entnimmt und den zweiten Behälter an einer entsprechenden externen Lagerposition abstellt.

6. Lagerverwaltungsverfahren, anwendbar auf einen Roboter in einem Lagersystem, wobei der Roboter mindestens zwei Gestelle im unbeladenen Zustand umfasst, umfassend:
Entnehmen (S401) mindestens eines zweiten Behälters von einer externen Lagerposition, die einer Ziel-Lagerposition entspricht, als Reaktion auf eine erste Vorgangsanweisung, und Abstellen des mindestens einen zweiten Behälters in mindestens einem ersten Gestell im Roboter; und
Durchführen (S402) eines Vorgangs an einem ersten Behälter als Reaktion auf eine zweite Vorgangsanweisung, um den ersten Behälter aus der Ziel-Lagerposition zu entnehmen oder den ersten Behälter in die Ziel-Lagerposition zu stellen;
wobei die erste Vorgangsanweisung und die zweite Vorgangsanweisung von einem Planungsserver erzeugt und gesendet werden, wenn die Ziel-Lagerposition des ersten Behälters eine interne Lagerposition in einer mehrfach tiefen Regaleinheit ist und mindestens ein zweiter Behälter in der der Ziel-Lagerposition entsprechenden externen Lagerposition positioniert ist;
**gekennzeichnet durch**
wobei die erste Vorgangsanweisung vom Planungsserver erzeugt und gesendet wird, wenn eine erste Dauer, die dem zweiten Zielbehälter entspricht, größer oder gleich einer zweiten Dauer ist, die dem zweiten Zielbehälter entspricht; wobei die erste Dauer eine Zeit ist, die der Planungsserver benötigt, um den Roboter so zu steuern, dass der Roboter den zweiten Behälter entnimmt und den zweiten Behälter in der entsprechenden freien Lagerposition abstellt, und die zweite Dauer eine Zeit ist, die der Planungsserver benötigt, um den Roboter so zu steuern, dass er den zweiten Behälter entnimmt und den zweiten Behälter in ein entsprechendes Gestell im unbeladenen Zustand abstellt.

7. Verfahren nach Anspruch 6, wobei, wenn die Gestelle im unbeladenen Zustand mindestens zwei dritte Gestelle umfassen oder mindestens ein zweites Gestell und mindestens zwei dritte Gestelle umfassen oder mindestens zwei zweite Gestelle und mindestens ein drittes Gestell umfassen, das mindestens eine erste Gestell im Roboter anhand von Positionsinformationen der Gestelle im unbeladenen Zustand bestimmt wird.

8. Verfahren nach Anspruch 6 oder 7, wobei das Verfahren ferner umfasst:
Entnehmen eines zweiten Zielbehälters als Reaktion auf eine dritte Vorgangsanweisung und Abstellen des zweiten Zielbehälters in einer entsprechenden freien Lagerposition, wobei die dritte Vorgangsanweisung vom Planungsserver erzeugt und gesendet wird, wenn eine dem zweiten Zielbehälter entsprechende erste Dauer kürzer ist als eine dem zweiten Zielbehälter entsprechende zweite Dauer, wobei die erste Dauer eine Zeit ist, die der Planungsserver benötigt, um den Roboter so zu steuern, dass der Roboter den zweiten Behälter entnimmt und den zweiten Behälter in der entsprechenden freien Lagerposition abstellt, und die zweite Dauer eine Zeit ist, die der Planungsserver benötigt, um den Roboter so zu steuern, dass er den zweiten Behälter entnimmt und den zweiten Behälter in ein entsprechendes Gestell in unbeladenem Zustand abstellt.

9. Verfahren nach einem der Ansprüche 6 bis 8, wobei das Verfahren ferner umfasst:
Entnehmen jedes zweiten Behälters aus einem entsprechenden ersten Gestell als Reaktion auf eine vierte Vorgangsanweisung und Abstellen des zweiten Behälters in einer entsprechenden externen Lagerposition.

10. Planungsserver (11), umfassend:
ein Bestimmungsmodul (51) das konfiguriert ist, um Attributinformationen einer Ziel-Lagerposition eines ersten Behälters zu bestimmen, wobei die Attributinformationen der Ziel-Lagerposition Positionsinformationen der Ziel-Lagerposition umfassen und der erste Behälter ein Behälter ist, an dem ein Roboter einen Zielvorgang ausführen soll;
wobei das Bestimmungsmodul (51) ferner konfiguriert ist, um: falls die Ziel-Lagerposition eine interne Lagerposition einer mehrfach tiefen Regaleinheit ist und mindestens ein zweiter Behälter in einer der Ziel-Lagerposition entsprechenden externen Lagerposition positioniert ist, mindestens ein erstes Gestell aus mindestens zwei Gestellen im unbeladenen Zustand des Roboters zu bestimmen; und
ein Sendemodul (52), das konfiguriert ist, um: eine erste Vorgangsanweisung an den Roboter zu senden, um den Roboter so zu steuern, dass er jeden zweiten Behälter entnimmt und den zweiten Behälter in das erste Gestell stellt, und eine zweite Vorgangsanweisung an den Roboter zu senden, um den Roboter so zu steuern, dass er einen der zweiten Vorgangsanweisung entsprechenden Vorgang am ersten Behälter durchführt, um den ersten Behälter aus der Ziel-Lagerposition zu entnehmen oder den ersten Behälter in die Ziel-Lagerposition zu stellen;
**gekennzeichnet durch**
wobei das Bestimmungsmodul (51) ferner konfiguriert ist zum:
Bestimmen, ob mindestens eine freie Lagerposition in einem Zielbereich vorhanden ist;
wenn die mindestens eine freie Lagerposition vorhanden ist, für jeden zweiten Behälter Bestimmen einer ersten Dauer, die benötigt wird, um den Roboter so zu steuern, dass er den zweiten Behälter entnimmt und in eine entsprechende freie Lagerposition abstellt, und einer zweiten Dauer, die benötigt wird, um den Roboter so zu steuern, dass er den zweiten Behälter entnimmt und in ein entsprechendes Gestell in unbeladenem Zustand abstellt;
Vergleichen der ersten Dauer mit der zweiten Dauer entsprechend jedem zweiten Container, und
Bestimmen des mindestens einen ersten Gestells aus den mindestens zwei Gestellen im unbeladenen Zustand des Roboters gemäß einem Vergleichsergebnis, wonach die erste Dauer größer oder gleich der zweiten Dauer ist.

11. Lagerverwaltungssystem, umfassend einen Planungsserver (11) nach Anspruch 10 und einen Roboter (12), wobei der Planungsserver (11) kommunikativ mit dem Roboter (12) verbunden ist und der Roboter umfasst:
ein Verarbeitungsmodul (61), das konfiguriert ist, um: als Reaktion auf einen ersten Vorgang einen zweiten Behälter aus einer externen Lagerposition, die einer Ziel-Lagerposition entspricht, zu entnehmen und den zweiten Behälter in ein erstes Gestell in einem Roboter zu stellen; und als Reaktion auf eine zweite Vorgangsanweisung einen Vorgang an einem ersten Behälter durchzuführen, um den ersten Behälter aus dem Ziellagerplatz zu entnehmen oder den ersten Behälter in den Ziellagerposition abzustellen, wobei die erste Vorgangsanweisung und die zweite Vorgangsanweisung von einem Planungsserver erzeugt und gesendet werden, wenn die Ziellagerposition des ersten Behälters eine interne Lagerposition ist, die sich in einem mehrfach tiefen Regaleinheit befindet, und mindestens ein zweiter Behälter in der externen Lagerposition abgestellt ist, die der Ziellagerposition entspricht;
**gekennzeichnet durch**
wobei die erste Vorgangsanweisung vom Planungsserver erzeugt und gesendet wird, wenn eine erste Dauer, die dem zweiten Zielbehälter entspricht, größer oder gleich einer zweiten Dauer ist, die dem zweiten Zielbehälter entspricht; wobei die erste Dauer eine Zeit ist, die der Planungsserver benötigt, um den Roboter so zu steuern, dass der Roboter den zweiten Behälter entnimmt und den zweiten Behälter in der entsprechenden freien Lagerposition abstellt, und die zweite Dauer eine Zeit ist, die der Planungsserver benötigt, um den Roboter so zu steuern, dass er den zweiten Behälter entnimmt und den zweiten Behälter in ein entsprechendes Gestell im unbeladenen Zustand abstellt.

12. Computerlesbares Speichermedium, wobei das computerlesbare Speichermedium konfiguriert ist, um computerausführbare Anweisungen zu speichern, und die computerausführbaren Anweisungen, wenn sie von einem Prozessor ausgeführt werden, das Verfahren nach einem der Ansprüche 1 bis 5 umzusetzen.

13. Computerprogrammprodukt, das ein Computerprogramm umfasst, wobei das Computerprogramm bei Ausführung durch einen Prozessor das Verfahren nach einem der Ansprüche 1 bis 5 umsetzt.

## Revendications

1. Procédé de gestion d'entrepôt, applicable à un serveur de planification (11) dans un système d'entrepôt, comprenant :
déterminer (S201, S301) des informations d'attribut d'une position d'entrepôt cible d'un premier conteneur, les informations d'attribut de la position d'entrepôt cible comprenant des informations de position de la position cible d'entrepôt, et le premier conteneur étant un conteneur sur lequel un robot doit effectuer une opération cible ;
si la position cible d'entrepôt est une position interne d'une unité de rayonnage à plusieurs niveaux de profondeur et qu'au moins un deuxième conteneur est placé dans une position externe d'entrepôt correspondant à la position cible d'entrepôt, déterminer (S202) au moins un premier rayonnage parmi au moins deux rayonnages dans un état sans charge du robot ;
envoyer (S203, S305) une première instruction de fonctionnement au robot afin de lui faire retirer chaque deuxième conteneur et de placer le deuxième conteneur dans l'au moins un premier rayonnage, et
envoyer (S203, S305) une deuxième instruction de fonctionnement au robot afin de commander au robot d'effectuer une opération correspondant à la deuxième instruction de fonctionnement sur le premier conteneur, pour retirer le premier conteneur de la position cible d'entrepôt ou pour placer le premier conteneur à la position cible d'entrepôt ;
**caractérisé par**
la détermination d'au moins un premier rayonnage parmi au moins deux rayonnages dans un état sans charge du robot comprend :
déterminer (S302) s'il existe au moins une position libre d'entrepôt dans une plage cible ;
si l'au moins une position d'entrepôt libre existe, pour chaque deuxième conteneur, déterminer (S303) une première durée nécessaire pour commander le robot afin qu'il retire le deuxième conteneur et le place dans une position d'entrepôt libre correspondante, ainsi qu'une deuxième durée nécessaire pour commander le robot afin qu'il retire le deuxième conteneur et le place dans un rayonnage correspondante à l'état sans charge ;
comparer (S304) la première durée et la deuxième durée correspondant à chaque deuxième conteneur, et
déterminer l'au moins un premier rayonnage parmi les au moins deux rayonnages dans un état sans charge du robot, en fonction d'un résultat de comparaison indiquant que la première durée est supérieure ou égale à la deuxième durée.

2. Procédé selon la revendication 1, dans lequel la détermination d'au moins un premier rayonnage parmi au moins deux rayonnage à l'état sans charge comprend :
acquérir des informations de position des au moins deux rayonnages à l'état sans charge, les rayonnages à l'état sans charge comprenant au moins deux troisièmes rayonnages, ou comprenant au moins un deuxième rayonnage et au moins deux troisièmes rayonnages, ou comprenant au moins deux deuxièmes rayonnages et au moins un troisième rayonnage, le deuxième rayonnage étant un rayonnage configuré uniquement pour stocker temporairement le deuxième conteneur lorsque le robot doit effectuer l'opération cible sur le premier conteneur; lorsque le robot comprend un deuxième rayonnage, le troisième rayonnage est un rayonnage autre que le deuxième rayonnage parmi les rayonnages du robot ; et lorsque le robot ne comprend pas de deuxième rayonnage, le troisième rayonnage est n'importe quel rayonnage du robot ; et
déterminer au moins un premier rayonnage parmi les rayonnages à l'état sans charge, en fonction des informations de position de chaque rayonnage à l'état sans charge.

3. Procédé selon la revendication 2, dans lequel la détermination de l'au moins un premier rayonnage parmi les rayonnages à l'état sans charge, en fonction des informations de position de chaque rayonnage à l'état sans charge, comprend :
déterminer une différence de hauteur entre chaque rayonnage dans un état sans charge et la position cible d'entrepôt, en fonction des informations de position de chaque rayonnage dans un état sans charge et des informations de position de la position cible d'entrepôt ; et
déterminer au moins un premier rayonnage selon un ordre croissant des différences de hauteur entre les informations de position des rayonnages dans un état sans charge et la position cible d'entrepôt.

4. Procédé selon la revendication 1, dans lequel le procédé comprend en outre :
en fonction du résultat de comparaison indiquant que la première durée est inférieure à la deuxième durée, envoyer une troisième instruction de fonctionnement au robot afin de lui faire retirer un deuxième conteneur cible et de placer le deuxième conteneur cible dans une position d'entrepôt libre correspondante, le deuxième conteneur cible étant un deuxième conteneur pour lequel la première durée correspondante est inférieure à la deuxième durée correspondante.

5. Procédé selon l'une quelconque des revendications 1 à 4, dans lequel le procédé comprend en outre :
envoyer (S306) une quatrième instruction e fonctionnement au robot afin de lui faire retirer chaque deuxième conteneur d'un premier rayonnage correspondant et de placer le deuxième conteneur à une position d'entrepôt externe correspondante.

6. Procédé de gestion d'entrepôt, applicable à un robot dans un système d'entrepôt, le robot comprenant au moins deux rayonnages dans un état sans charge, comprenant :
retirer (S401) au moins un deuxième conteneur depuis une position d'entrepôt externe correspondant à une position d'entrepôt cible en réponse à une première instruction de fonctionnement, et placer l'au moins un deuxième conteneur dans au moins un premier rayonnage dans le robot ; et
effectuer (S402) une opération sur un premier conteneur en réponse à une deuxième instruction d'opération visant à retirer le premier conteneur de la position cible d'entrepôt ou à placer le premier conteneur à la position cible d'entrepôt ;
dans lequel la première instruction d'opération et la deuxième instruction d'opération sont générées et envoyées par un serveur de planification lorsque la position d'entrepôt cible du premier conteneur est une position interne située dans un rayonnage à plusieurs niveaux de profondeur et qu'au moins un deuxième conteneur est placé dans la position d'entrepôt externe correspondant à la position d'entrepôt cible ;
**caractérisé par**
dans lequel la première instruction d'opération est générée et envoyée par le serveur de planification lorsqu'une première durée correspondant au deuxième conteneur cible est supérieure ou égale à une deuxième durée correspondant au deuxième conteneur cible ; la première durée correspond au temps nécessaire au serveur de planification pour commander le robot afin qu'il retire le deuxième conteneur et le place dans la position d'entrepôt libre correspondante, et la deuxième durée correspond au temps nécessaire au serveur de planification pour commander le robot afin qu'il retire le deuxième conteneur et le place dans un rayonnage correspondant à l'état sans charge.

7. Procédé selon la revendication 6, dans lequel, lorsque les rayonnages à l'état sans charge comprennent au moins deux troisièmes rayonnages, ou comprennent au moins un deuxième rayonnage et au moins deux troisièmes rayonnages, ou comprennent au moins deux deuxièmes rayonnages et au moins un troisième rayonnage, l'au moins un premier rayonnage du robot est déterminé en fonction des informations de position des rayonnages à l'état sans charge.

8. Procédé selon la revendication 6 ou 7, dans lequel le procédé comprend en outre :
retirer un deuxième conteneur cible en réponse à une troisième instruction d'opération, et placer le deuxième conteneur cible dans une position d'entrepôt libre correspondante, la troisième instruction d'opération étant générée et envoyée par le serveur de planification lorsqu'une première durée correspondant au deuxième conteneur cible est inférieure à une deuxième durée correspondant au deuxième conteneur cible, la première durée étant le temps nécessaire au serveur de planification pour commander au robot de retirer le deuxième conteneur et de le placer dans la position d'entrepôt libre correspondante, et la deuxième durée correspond au temps nécessaire au serveur de planification pour commander le robot afin qu'il retire le deuxième conteneur et le place dans un rayonnage correspondant à l'état sans charge.

9. Procédé selon l'une quelconque des revendications 6 à 8, dans lequel le procédé comprend en outre :
retirer chaque deuxième conteneur d'un premier rayonnage correspondant en réponse à une quatrième instruction d'opération, et placer le deuxième conteneur à une position d'entrepôt externe correspondante.

10. Serveur de planification (11), comprenant :
un module de détermination (51), configuré pour déterminer des informations d'attributs d'une position d'entrepôt cible d'un premier conteneur, les informations d'attributs de la position d'entrepôt cible comprenant des informations de position de la position d'entrepôt cible, et le premier conteneur étant un conteneur sur lequel un robot doit effectuer une opération cible ;
le module de détermination (51) étant en outre configuré pour : si la position d'entrepôt cible est une position d'entrepôt interne d'une unité de rayonnage à plusieurs niveaux de profondeur et qu'au moins un deuxième conteneur est placé dans une position d'entrepôt externe correspondant à la position d'entrepôt cible, déterminer au moins un premier rayonnage parmi au moins deux rayonnages dans un état sans charge du robot ; et
un module d'envoi (52), configuré pour : envoyer une première instruction d'opération au robot afin de commander au robot de retirer chaque deuxième conteneur et de placer le deuxième conteneur dans le premier rayonnage, et envoyer une deuxième instruction d'opération au robot afin de commander au robot d'effectuer une opération correspondant à la deuxième instruction d'opération sur le premier conteneur, de retirer le premier conteneur de la position d'entrepôt cible ou de placer le premier conteneur dans la position d'entrepôt cible ;
**caractérisé par**
dans lequel le module de détermination (51) est en outre configuré pour :
déterminer s'il existe au moins une position d'entrepôt libre dans une plage cible ;
si l'au moins une position d'entrepôt libre existe, pour chaque deuxième conteneur, déterminer une première durée nécessaire pour commander le robot afin qu'il retire le deuxième conteneur et le place dans une position d'entrepôt libre correspondante, ainsi qu'une deuxième durée nécessaire pour commander le robot afin qu'il retire le deuxième conteneur et le place dans un rayonnage correspondante à l'état sans charge;
comparer la première durée et la deuxième durée correspondant à chaque second conteneur, et
déterminer l'au moins un premier rayonnage parmi les au moins deux rayonnages dans un état sans charge du robot, en fonction d'un résultat de comparaison indiquant que la première durée est supérieure ou égale à la deuxième durée.

11. Système de gestion d'entrepôt, comprenant un serveur de planification (11) selon la revendication 10 et un robot (12), dans lequel le serveur de planification (11) est connecté de manière communicative au robot (12) et le robot comprend
un module de traitement (61), configuré pour : retirer un deuxième conteneur d'une position d'entrepôt externe correspondant à une position d'entrepôt cible en réponse à une première instruction d'opération, et placer le deuxième conteneur dans un premier rayonnage d'un robot; et effectuer une opération sur un premier conteneur en réponse à une deuxième instruction d'opération visant à retirer le premier conteneur de la position d'entrepôt cible ou à placer le premier conteneur dans la position d'entrepôt cible, dans lequel la première instruction d'opération et la deuxième instruction d'opération sont générées et envoyées par un serveur de planification lorsque la position d'entrepôt cible du premier conteneur est une position d'entrepôt interne située dans une unité de rayonnage à plusieurs niveaux de profondeur et qu'au moins un deuxième conteneur est placé dans la position d'entrepôt externe correspondant à la position d'entrepôt cible ;
**caractérisé par**
dans lequel la première instruction d'opération est générée et envoyée par le serveur de planification lorsqu'une première durée correspondant au deuxième conteneur cible est supérieure ou égale à une deuxième durée correspondant au deuxième conteneur cible ; la première durée correspond au temps nécessaire au serveur de planification pour commander le robot afin qu'il retire le deuxième conteneur et le place dans la position d'entrepôt libre correspondante, et la deuxième durée correspond au temps nécessaire au serveur de planification pour commander le robot afin qu'il retire le deuxième conteneur et le place dans un rayonnage correspondant à l'état sans charge.

12. Support de stockage lisible par ordinateur, dans lequel le support de stockage lisible par ordinateur est configuré pour stocker des instructions exécutables par ordinateur, et les instructions exécutables par ordinateur, lorsqu'elles sont exécutées par un processeur, mettant en œuvre le procédé selon l'une quelconque des revendications 1 à 5.

13. Produit de programme informatique, comprenant un programme informatique, dans lequel le programme informatique, lorsqu'il est exécuté par un processeur, met en œuvre le procédé selon l'une quelconque des revendications 1 à 5.
